(19) Europäisches Patentamt
European Patent Office
Office européen des brevets

(11) **EP 2 211 284 A1**

(12) **DEMANDE DE BREVET EUROPEEN**

(43) Date de publication:
**28.07.2010 Bulletin 2010/30**

(51) Int Cl.:
***G06F 17/50*** *(2006.01)*     *H04R 29/00* *(2006.01)*

(21) Numéro de dépôt: **10150779.6**

(22) Date de dépôt: **14.01.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **14.01.2009 FR 0950188**

(71) Demandeur: **Vernois, M.Lionel**
**75013 Paris (FR)**

(72) Inventeur: **Vernois, M.Lionel**
**75013 Paris (FR)**

(74) Mandataire: **Callon de Lamarck, Jean-Robert et al**
**Cabinet Regimbeau**
**20 rue de Chazelles**
**75847 Paris cedex 17 (FR)**

(54) **qualification des performances acoustiques de produits**

(57) L'invention concerne un procédé d'estimation du comportement vibro-acoustique d'un système final à partir d'une courbe ($C_{S1,mes}$) de comportement vibro-acoustique d'un système initial donné, le procédé comprenant les étapes suivantes :
- décomposition (E3) primaire, de la courbe ($C_{S1,mes}$) de comportement du système initial en plusieurs courbes de décomposition ($C_{S1,masse}$, $C_{S1,lissée}$, $C_{S1,prol}$, $C_{S1,cr}$...), chaque courbe de décomposition correspondant à un phénomène ou à un comportement vibro-acoustique donné ;
- modification (E4) d'une courbe de décomposition primaire pour l'adapter aux caractéristiques du système final dont le comportement est à estimer ;
- recomposition (E5) d'une courbe ($C_{S2,mes}$) caractéristique du comportement vibro-acoustique du système final à partir de la courbe adaptée.

FIG. 5

EP 2 211 284 A1

**Description**

L'invention concerne le domaine de la qualification des performances acoustiques de produits.

La demande en protection contre le bruit à domicile et sur le lieu de travail évolue de plus en plus vite. Le calme est devenu le premier critère de choix des français en recherche d'un logement, avant même sa localisation ou sa taille.

Cette situation impose une meilleure prise en compte de l'acoustique par les industriels de la construction. Or aujourd'hui dans ce domaine, contrairement à la thermique ou à la mécanique des structures, il n'existe pas de procédé pertinent pour déterminer les performances acoustiques de produits.

L'unique voie existante est la réalisation d'une mesure en laboratoire spécialisé. Cela représente un coût important et parfois prohibitif pour les industriels concernés qui ne mesurent qu'une partie des produits fabriqués et dans un nombre de configurations restreint.

Depuis les premiers essais de prédiction des performances acoustiques de systèmes jusqu'à aujourd'hui, les recherches se sont focalisées sur le développement d'approches théoriques calculatoires dont le principe est de synthétiser un résultat à partir d'informations quantitatives sur le système étudié (dimensions, masses volumiques, raideurs, amortissement etc.).

Parmi elles, on note l'approche par ondes planes, la méthode modale, les approches énergétiques, la méthode éléments finis.

Mais ces voies se heurtent invariablement à des difficultés calculatoires fortes qui imposent de limiter leurs applications à des matériaux et des structures proches du cas idéal.

Si cela correspond bien à des domaines tels que les machines, les transports ou l'aérospatiale, le domaine du bâtiment est à l'opposé de la situation requise. De ce fait, les approches calculatoires existantes sont inadéquates et sont exclusivement utilisées dans une optique de recherche ou de dimensionnement de produit.

Le but de l'invention est donc de pallier à ce manque et de proposer un procédé d'estimation du comportement vibro-acoustique adapté aux produits du bâtiment. Ce domaine d'application n'est toutefois pas limitatif.

Pour cela, l'invention propose un procédé d'estimation du comportement vibro-acoustique d'un système final à partir d'au moins une courbe de comportement vibro-acoustique d'au moins un système initial donné, ladite courbe de comportement étant obtenue par mesures acoustiques ou vibratoires sur ledit système initial ou par simulation, **caractérisé en ce qu'**il comprend les étapes suivantes :

- décomposition primaire, de la courbe de comportement du système initial, ou d'au moins une courbe issue de celle-ci, en plusieurs courbes de décomposition, chaque courbe de décomposition correspondant à un phénomène ou à un comportement vibro-acoustique donné ;
- modification d'au moins une courbe de décomposition primaire ou d'au moins une courbe issue de celle-ci pour l'adapter aux caractéristiques du système final dont le comportement est à estimer ;
- recomposition d'une courbe caractéristique du comportement vibro-acoustique du système final à partir de la ou des courbe(s) adaptée(s) et/ou d'une ou plusieurs courbe(s) de décomposition primaire.

Un avantage de l'invention est qu'elle met à disposition un procédé à la fois simple, précis et robuste.

D'autres caractéristiques optionnelles mais non limitatives sont :

- le phénomène ou le comportement vibro-acoustique est compris dans le groupe suivant :

  • un phénomène de résonance vibro-acoustique ;
  • un phénomène de fréquence critique ;
  • un phénomène d'interaction avec un référentiel initial ;
  • un phénomène vibratoire intrinsèque au système initial ;
  • un comportement suivant une loi de masse ;
  • un comportement de type « raideur » ;
  • un comportement de type «paroi double» ;

- dans l'étape de première décomposition et dans le cas d'un phénomène vibro-acoustique, une deuxième décomposition de la courbe de décomposition primaire correspondant au phénomène en au moins une courbe de comportement secondaire dépendante du phénomène et au moins une courbe de comportement secondaire indépendante du phénomène ;
- lorsque le phénomène vibro-acoustique occasionne une variation d'amplitude sur la courbe de comportement du système initial avec un extremum local, la ou les courbes de comportement secondaire(s) sont comprise(s) dans le groupe suivant :

- une première courbe extrapolée indépendante du phénomène et correspondant à une extrapolation de la courbe de comportement du système initial, pour des abscisses inférieures à l'abscisse de l'extremum local ;
- une deuxième courbe représentant la variation d'amplitude occasionnée par le phénomène vibro-acoustique pour les abscisses inférieures à l'abscisse de l'extremum local ;
- une troisième courbe extrapolée indépendante du phénomène et correspondant à une extrapolation de la courbe de comportement du système initial, pour les abscisses supérieures à l'abscisse de l'extremum local ;
- une quatrième courbe représentant la variation d'amplitude occasionnée par le phénomène vibro-acoustique pour les abscisses supérieures à l'abscisse de l'extremum local ;

- la troisième courbe est obtenue par régression linéaire réalisé sur une portion de la courbe de comportement du système initial d'abscisse supérieure à l'abscisse de l'extremum local ; et en ce que la quatrième courbe est obtenue par différence entre la troisième courbe et la courbe de comportement du système initial ou une courbe déduite de celle-ci ;
- la modification est réalisée par translation de la courbe de décomposition primaire et/ou d'une des courbes de décomposition secondaire ;
- la courbe de comportement vibro-acoustique du système final est obtenue par recomposition des première, deuxième, troisième et quatrième courbes de la manière suivante:

- la deuxième courbe, éventuellement adaptée, est ajoutée ou éventuellement retranchée à la première courbe, également éventuellement adapté, en-deçà de l'abscisse de l'extremum local ;
- la différence, à l'abscisse de l'extremum local, entre la troisième courbe non adaptée et la première courbe non adaptée est enregistrée ;
- la troisième courbe est translatée suivant l'axe des ordonnées de sorte que l'intersection avec la première courbe, éventuellement adaptée se fasse à l'abscisse de l'extremum local, éventuellement adaptée au système final ;
- la différence, à l'abscisse de l'extremum local, entre la troisième courbe non adaptée et la première courbe non adaptée est ajoutée à la troisième courbe précédemment translatée ;
- la quatrième courbe, éventuellement adaptée, est soustraite de la troisième courbe ainsi translatée, au-delà de l'abscisse de l'extremum local ;
- la courbe de décomposition primaire et la courbe adaptée, ou au moins une courbe issue de celles-ci, sont recomposées ensemble en associant les courbes ainsi modifiées ;

- préalablement à toute décomposition, modification et recomposition, la courbe de comportement du système initial est transposée dans un référentiel de référence, dans lequel les phénomènes vibro-acoustiques non intrinsèques au système initial, ou à une partie du système, sont minimisés à l'aide d'une fonction de transfert, les étapes de décomposition, modification et recomposition sont alors effectuées sur les courbes transposées dans ce référentiel de référence ;
- la courbe de comportement du système final estimée dans le référentiel de référence est transposée dans un référentiel final, correspondant au référentiel du système final, à l'aide d'une fonction de transfert après les étapes de décomposition, modification et recomposition ;
- la courbe de comportement du système initial est une courbe mesurée et la ou les transpositions sont obtenues par corrélation avec au moins une autre courbe mesurée ;
- la courbe de comportement du système initial est une courbe mesurée et dans lequel la ou les fonction(s) de transfert est ou sont obtenue(s) par soustraction entre une courbe de comportement mesurée d'un des matériaux constituant le système initial et une courbe de comportement simulée de ce matériau du système initial, et/ou par une soustraction entre une courbe de comportement mesurée d'un des matériaux constituant le système final et une courbe de comportement simulée de ce matériau du système final.

L'invention propose également un programme d'ordinateur susceptible de mettre en oeuvre le procédé selon l'invention lorsqu'il est implémenté dans un ordinateur pour l'estimation du comportement vibro-acoustique d'un système final à partir d'au moins une courbe de comportement vibro-acoustique d'un système initial donné, ladite courbe de comportement étant obtenue par mesures acoustiques ou vibratoires sur ledit système initial ou par simulation.

D'autres caractéristiques, buts et avantages de l'invention apparaîtront à la lecture de la description détaillée qui va suivre, au regard des dessins annexés, donnés à titre d'exemples non limitatifs et sur lesquels :

- la figure 1 est une représentation schématique du procédé d'estimation selon l'invention ;
- les figures 2 à 5 et 7 à 11 sont des graphes représentant des courbes d'indice d'affaiblissement acoustique et de comportement vibro-acoustique mesurées et/ou estimées lors des différentes étapes du procédé selon l'invention ;

- la figure 6 est un graphe représentant certaines caractéristiques de phénomènes ;
- la figure 12 est un graphe représentant une courbe mesurée de comportement vibro-acoustique d'un système donné (en l'occurrence d'affaiblissement acoustique) ainsi qu'une courbe estimée par le procédé de la présente invention de comportement vibro-acoustique du même système ; et
- la figure 13 est une vue schématique d'un système comprenant un matériau support et un matériau d'isolation.

Le procédé de l'invention est un procédé d'estimation du comportement vibro-acoustique d'un système (système final) à partir d'une ou de plusieurs courbes de comportement vibro-acoustique d'un ou de plusieurs autres systèmes (systèmes initiaux).

La description qui suit précise les termes utilisés ci-après.

Une « courbe de comportement vibro-acoustique » est compris ci-après, comme un ensemble de valeurs (affaiblissement, déplacement, vitesse etc.) en fonction d'une grandeur de référence (fréquence, espace, déplacement etc.), l'ensemble de valeurs représentant la réponse d'un système à une sollicitation vibratoire et/ou acoustique. Comme exemples non limitatifs de courbe de comportement vibro-acoustique on notera l'indice d'affaiblissement acoustique (qui représente l'affaiblissement acoustique d'un système en fonction de la fréquence) et l'affaiblissement aux bruits de chocs.

Un « phénomène » est un fait observable ou que l'on peut constater par une expérience et qui est susceptible de se répéter ou d'être reproduit.

Un « phénomène vibro-acoustique » est donc un fait observable ou que l'on peut constater. Ce fait est lié ou causé par des ondes dans le domaine des fréquences audibles ou inaudibles. Par exemple, une résonance acoustique ou vibratoire, une antirésonance...

Une « structure phénoménologique » est un ensemble de phénomènes et/ou comportements vibro-acoustiques relatifs à un système donné.

Un « système » est compris ci-après, comme un ensemble constitué d'un assemblage de plusieurs matériaux, via éventuellement des éléments de fixation et comprenant éventuellement des cavités remplies ou non de gaz. Parmi ces matériaux on distingue un ou plusieurs matériaux de support **caractérisés en ce que** leur masse est supérieure à celle des autres matériaux et/ou que leur rôle est prépondérant dans le comportement vibro-acoustique du système. Un matériau de support peut également être composé de plusieurs éléments.

Dans un premier exemple, un système comprend un panneau de plâtre associé à un isolant fibreux collé par plots de colle à un mur en parpaing qui est le matériau de support. Dans un second exemple, un système comprend : un faux plafond suspendu à une dalle en béton et l'espace entre le panneau et la dalle (éventuellement rempli d'isolant). La dalle de béton est, dans ce cas, le matériau de support.

Le terme « référentiel » utilisé désigne un espace (au sens mathématique) dans lequel l'expression d'une courbe de comportement vibro-acoustique d'un système est dépendante de phénomènes vibro-acoustiques non intrinsèques au système (ou à la partie du système qui intéresse l'opérateur). L'ensemble de ces phénomènes constitue la spécificité vibro-acoustique du référentiel. Ainsi par exemple, lorsque la courbe de comportement vibro-acoustique est une mesure d'indice d'affaiblissement acoustique réalisée en laboratoire, elle intègre l'expression de phénomènes vibro-acoustiques spécifiques liés à la géométrie du laboratoire et à la mise en oeuvre du produit dans le laboratoire, qui ne dépendent pas intrinsèquement du produit. Ils constituent la spécificité acoustique du référentiel de mesure.

On notera « référentiel initial », le référentiel dans lequel est exprimée la courbe de comportement vibro-acoustique du système initial.

On notera de même, « référentiel de référence », un référentiel dans lequel les phénomènes vibro-acoustiques non intrinsèques au système (ou a la partie du système qui intéresse l'opérateur) sont minimisés sur la courbe de comportement vibro-acoustique. Par exemple, dans le cas où la courbe de comportement vibro-acoustique initiale est une mesure d'indice d'affaiblissement acoustique réalisée en laboratoire, le référentiel de référence est un référentiel dans lequel la courbe ne dépend plus des spécificités acoustiques du laboratoire qui l'a produite.

On notera « référentiel final », un référentiel dans lequel les phénomènes vibro-acoustiques non intrinsèques au système ne sont plus minimisés sur la courbe de comportement vibro-acoustique et sont relatifs à l'objectif pour lequel le présent procédé d'estimation est utilisé. Par exemple, dans le cas où la courbe de comportement vibro-acoustique initiale correspond à la mesure d'indice d'affaiblissement acoustique d'un produit mis en oeuvre sur un mur support A, et que l'on souhaite réaliser l'estimation du comportement vibro-acoustique du produit sur un mur support B dans les même conditions générales que la mesure A, le référentiel final est un référentiel soulignant les caractéristiques vibro-acoustiques du mur support B.

La description qui suit précise chacune des étapes d'application du procédé.

Le procédé selon l'invention concerne l'estimation du comportement vibro-acoustique d'un système final à partir d'au moins une courbe de comportement vibro-acoustique d'au moins un système initial donné, ladite courbe de comportement étant obtenue par mesures acoustiques ou vibratoires sur ledit système initial ou par simulation.

Pour plus de clarté nous décrirons tout d'abord le procédé en ne prenant en compte qu'une seule courbe de comportement vibro-acoustique initiale puis nous donnerons un exemple d'utilisation de plusieurs courbes initiales.

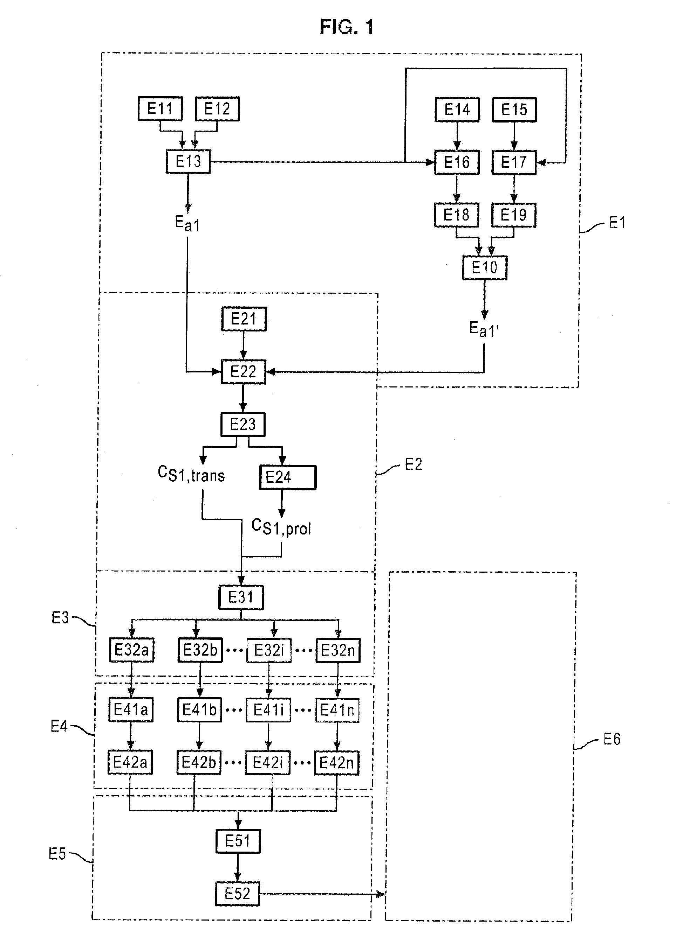

En référence à la figure 1, le procédé comprend les étapes suivantes :

- décomposition E3 primaire, de la courbe de comportement du système initial, ou d'au moins une courbe issue de celle-ci, en plusieurs courbes de décomposition, chaque courbe de décomposition correspondant à un phénomène ou à un comportement vibro-acoustique donné ;
- modification E4 d'au moins une courbe de décomposition primaire ou d'au moins une courbe issue de celle-ci pour l'adapter aux caractéristiques du système final dont le comportement est à estimer ;
- recomposition E5 d'une courbe caractéristique du comportement vibro-acoustique du système final à partir de la ou des courbe(s) adaptée(s) et/ou d'une ou plusieurs courbe(s) de décomposition primaire.

Les étapes de décomposition primaire, de modification et de recomposition peuvent être réalisées par des modules spécifiques ou non.

L'étape de décomposition E3 peut se faire en plusieurs sous-étapes. Par exemple, dans une première sous-étape E31 est identifiée la structure phénoménologique du système initial. Il s'agit d'identifier les différentes phases de comportement vibro-acoustique du système initial et les phénomènes vibro-acoustiques sous-tendant ce comportement. La plupart de ces comportements et phénomènes sont connus de l'homme du métier et dépendent de la géométrie du système initial. La qualité de leur identification dépend des connaissances vibro-acoustiques de l'homme du métier.

La deuxième sous-étape E32a, E32b... E32i... E32n concerne la décomposition proprement dite. La courbe de comportement du système initial ou une courbe issue de celle-ci est décomposée suivant la structure phénoménologique identifiée. On obtient alors un ensemble $C_{S1,1}$, $C_{S1,2}$... $C_{S1,i}$... $C_{S1,n}$... de courbes de décomposition primaire, correspondant chacune aux différents phénomènes et comportements vibro-acoustiques de la structure phénoménologique identifiée. La décomposition E3 dépend du type de comportement vibro-acoustique et de phénomène à traiter.

L'étape E4 de modification consiste à :

- déterminer, dans une sous-étape E41i, la modification devant être réalisée sur chacun des phénomènes et des comportements pour passer du système initial au système final ;
- adapter, dans une sous-étape E42i, chacun des phénomènes et des comportements.

La détermination E41i des phénomènes et comportements vibro-acoustiques qui changent entre le système initial et le système final est réalisée à partir d'une analyse vibro-acoustique classique. Les moyens utilisés pour cela sont laissés à la discrétion de l'homme du métier.

De même, l'adaptation E42i d'un phénomène ou comportement peut être réalisée à partir de plusieurs techniques dont le choix est laissé à la discrétion de l'homme du métier. D'un point de vue général, les adaptations se font relativement aux caractéristiques des courbes à adapter.

A l'issue de cette étape E4, on obtient des courbes adaptées correspondant aux phénomènes (ou comportements) vibro-acoustiques constituants la structure phénoménologique du système final.

L'étape de recomposition E5 est le processus inverse de la décomposition E3 mais en prenant en compte les phénomènes et les comportements adaptés au système final. La recomposition est effectuée pour chaque phénomène et comportement dans l'ordre d'apparition du phénomène et du comportement. Par exemple, si les courbes de comportement sont des courbes d'affaiblissement en fonction de la fréquence, la recomposition est effectuée dans l'ordre des fréquences d'apparition des phénomènes et comportements.

Le phénomène ou le comportement vibro-acoustique peut être choisi dans le groupe suivant :

- un phénomène de résonance vibro-acoustique ;
- un phénomène de fréquence critique ;
- un phénomène d'interaction avec un référentiel initial ;
- un phénomène vibratoire intrinsèque au système initial ;
- un comportement suivant une loi de masse ;
- un comportement de type « raideur » ;
- un comportement de type «paroi double».

Un phénomène critique est un phénomène résultant de la coïncidence entre la vitesse d'onde de flexion dans un matériau composant le système et la vitesse du son dans l'air.

Un phénomène d'interaction avec le référentiel initial est un phénomène qui n'est pas intrinsèque au système initial et qui est issu d'une interaction entre le système initial et le référentiel initial (par exemple, une interaction entre le laboratoire de mesure et le produit mesuré dans le cas d'une mesure d'indice d'affaiblissement acoustique, ou bien les caractéristiques propres apportés par une méthode de calcul modifiant le système envisagé dans le cas d'une simulation).

Plusieurs lois de masse, phénomènes de résonance vibro-acoustique, fréquences critiques, phénomènes d'interaction avec référentiel initial, phénomènes vibratoires sont, bien entendu, possibles.

Une loi de masse est une partie de la courbe de comportement dans laquelle le système se comporte comme une masse. Son identification est réalisée par une analyse vibro-acoustique classique. Il s'agit de sélectionner la portion de courbe de comportement vibro-acoustique correspondant à ce comportement et, de réaliser une extrapolation pour les abscisses en dehors de ladite portion de courbe, par exemple au reste du spectre fréquentiel (dans le cas où elle est exprimée en fonction de la fréquence), soit par régression linéaire, soit par une autre méthode choisie par l'homme du métier, comme par exemple une approche calculatoire.

Par exemple, pour adapter une courbe de comportement comme la loi de masse, on utilise préférentiellement des moyens d'évaluation semi-expérimentaux mêlant mesure et simulation numérique ou encore des moyens de calcul.

En ce qui concerne les courbes représentant la variation d'amplitude produit par le phénomène vibro-acoustique, on s'intéresse spécifiquement à une variation d'abscisse d'extremum local d'apparition des phénomènes qui provoquent ces variations d'amplitude.

Par exemple, concernant l'adaptation de chacun de ces phénomènes et comportements, dans le cas où la courbe de comportement vibro-acoustique est exprimée en fonction de la fréquence, si une fréquence de résonance change, l'adaptation nécessaire pour passer de la résonance du système initial à celle du système final peut être calculée à partir de la relation suivante (si le système contient deux matériaux séparés par une cavité) :

$$f_{rés} = \frac{1}{2\pi} \sqrt{\frac{\rho_0 \cdot c^2}{d} \cdot \frac{ms_1 + ms_2}{ms_1 \cdot ms_2}} \; .$$

Où $mS_1$ et $mS_2$ sont les masses surfaciques des matériaux, d est l'épaisseur de la cavité, $c$ est la célérité du son dans le fluide de la cavité et $\rho_0$ sa densité.

Autre exemple, si la fréquence critique d'un matériau change, l'adaptation nécessaire pour passer de la fréquence critique du matériau du système initial à celle du matériau du système final peut être réalisée par calcul à partir de la relation suivante :

$$f_{cr} = \frac{c^2}{2\pi} \sqrt{\frac{ms_2}{D}} \; ; \; D = \frac{E \cdot h^3}{12} \; ;$$

où E est le module d'Young du matériau dont la masse surfacique est $mS_1$ ; et h l'épaisseur du matériau.

Le procédé peut comprendre, dans l'étape de décomposition et dans le cas d'un phénomène vibro-acoustique, une deuxième décomposition de la courbe de décomposition primaire correspondant au phénomène en au moins une courbe de comportement secondaire dépendante du phénomène et au moins une courbe de comportement secondaire indépendante du phénomène.

Lorsque le phénomène vibro-acoustique occasionne une variation d'amplitude ponctuelle sur la courbe de comportement du système initial avec un extremum local, la ou les courbe(s) de comportement secondaire(s) peut/ peuvent être choisie(s) dans le groupe suivant :

- une première courbe extrapolée indépendante du phénomène et correspondant à une extrapolation de la courbe de comportement du système initial, pour des abscisses inférieures à l'abscisse de l'extremum local ;
- une deuxième courbe représentant la variation d'amplitude occasionnée par le phénomène vibro-acoustique pour les abscisses inférieures à l'abscisse de l'extremum local ;
- une troisième courbe extrapolée (également appelée courbe lissée) indépendante du phénomène et correspondant à une extrapolation de la courbe de comportement du système initial, pour les abscisses supérieures à l'abscisse de l'extremum local ;
- une quatrième courbe représentant la variation d'amplitude occasionnée par le phénomène vibro-acoustique pour les abscisses supérieures à l'abscisse de l'extremum local.

Les première et troisième courbes sont dites indépendantes du phénomène car elles simulent le cas où le phénomène vibro-acoustique ne produit pas de variation d'amplitude sur la courbe de comportement.

Chaque phénomène vibro-acoustique de la structure phénoménologique identifiée peut donc être lui-même décomposé en quatre courbes.

Lorsque cette variation est une diminution (minimum local), celle-ci est appelée dégradation. Cette technique de décomposition est particulièrement adaptée aux phénomènes de résonance.

Pour la première courbe, celle-ci peut être une extrapolation obtenue soit par estimation à l'aide de codes de calcul, soit à l'aide de mesures annexes, soit par régression linéaire.

Pour la troisième courbe, celle-ci peut être obtenue par régression linéaire sur une portion de la courbe de comportement d'abscisse supérieure à celle de l'extremum local du phénomène et dont l'évolution est proche d'une évolution logarithmique.

La deuxième courbe peut correspondre à une différence entre la première courbe ci-dessus et la courbe de comportement, éventuellement prolongée, en-deçà de l'extremum local.

La quatrième courbe, dite accélération, peut correspondre à une différence entre la troisième courbe lissée et la courbe de comportement, éventuellement prolongée au-delà de l'extremum local.

Une autre approche de décomposition secondaire, adaptée aux phénomènes vibro-acoustiques, consiste à décomposer la courbe de comportement en deux éléments. C'est une solution adaptée au phénomène de fréquence critique. Ces deux éléments sont les suivants :

- une première courbe extrapolée de la courbe de comportement, indépendante du phénomène vibro-acoustique, obtenue sur une zone d'abscisses entourant celle de l'extremum local du phénomène soit par estimation soit à l'aide de mesures annexes ;
- une deuxième courbe représentant la variation d'amplitude occasionnée par le phénomène pour des abscisses entourant celle de l'extremum local du phénomène.

La première courbe est dite indépendante du phénomène en ce qu'elle simule le cas où le phénomène vibro-acoustique ne produit pas de variation d'amplitude sur la courbe.

La deuxième courbe est obtenue par différence entre la première courbe et la courbe de comportement, éventuellement prolongée.

Les phénomènes d'interaction avec le référentiel initial et les phénomènes vibratoires intrinsèques au système initial ne sont pas des phénomènes génériques, ils sont entièrement liés à la composition particulière du produit, à sa mise en oeuvre et aux particularités du laboratoire de mesure, ils donnent lieu à une étude vibro-acoustique indépendante et sont éventuellement traités comme des phénomènes de résonance vibro-acoustiques.

L'étape de modification peut être réalisée par translation de la courbe de décomposition primaire et/ou d'une des courbes de décomposition secondaire.

Dans le cas où une courbe correspondant à un phénomène est décomposée en quatre courbes de décomposition secondaire, la courbe de comportement vibro-acoustique du système final peut être obtenue par recomposition des première, deuxième, troisième et quatrième courbes de la manière suivante :

- la deuxième courbe, éventuellement adaptée, est ajoutée ou éventuellement retranchée à la première courbe, également éventuellement adaptée, en-deçà de l'abscisse de l'extremum local ;
- la différence T, à l'abscisse de l'extremum local, entre la troisième courbe non adaptée et la première courbe non adaptée est enregistrée ;
- la troisième courbe est translatée suivant l'axe des ordonnées de sorte que l'intersection avec la première courbe, éventuellement adaptée se fasse à l'abscisse de l'extremum local, éventuellement adaptée au système final ;
- la différence T, à l'abscisse de l'extremum local, entre la troisième courbe non adaptée et la première courbe non adaptée est ajoutée à la troisième courbe précédemment translatée ;
- la quatrième courbe, éventuellement adaptée, est soustraite de la troisième courbe ainsi translatée au-delà de l'abscisse de l'extremum local ;
- la courbe de décomposition primaire et la courbe adaptée, ou au moins une courbe issue de celles-ci, sont recomposées ensemble en associant les courbes ainsi modifiées.

On obtient alors la courbe de comportement vibro-acoustique du système final.

Dans le cas où la courbe de comportement vibro-acoustique du système initial est présentée avec un échantillonnage dont l'intervalle d'abscisse est trop restreint pour appliquer le procédé, la courbe de comportement vibro-acoustique du système final est obtenue par interpolation E52 avec des calculs et recompositions pour des cas encadrant les extrema locaux souhaités. Par exemple, si la courbe de comportement vibro-acoustique du système initial est une mesure présentée en tiers d'octave, donc avec un échantillonnage fréquentiel important (point 1 :100Hz, point 2 : 125 Hz, point 3 : 160 Hz, point 4 : 200hz etc.) et que les calculs ou/et la recomposition font intervenir des résonances de fréquence intermédiaires (180Hz par exemple), la courbe transposée de comportement vibro-acoustique du système final est obtenue par interpolation E52 avec des calculs et recompositions pour les deux tiers d'octave encadrant les fréquences de résonance souhaitées (160Hz et 200Hz pour l'exemple).

Préalablement à toute décomposition E3, modification E4 et recomposition E5, la courbe de comportement du système initial peut être transposée dans un référentiel de référence, dans lequel les phénomènes vibro-acoustiques non intrinsèques au système initial, ou à une partie du système, sont minimisés à l'aide d'une fonction de transfert, les étapes de décomposition, modification et recomposition sont réalisées dans ce référentiel de référence, c'est-à-dire avec la courbe de comportement du système initial transposée.

Cette étape de transposition consiste tout d'abord à déterminer, dans l'étape E1, les fonctions de transfert initiales (ou encore empreintes acoustiques) permettant de transposer la courbe de comportement vibro-acoustique du système initial vers un référentiel de référence. On distingue la fonction de transfert initiale primaire de la fonction de transfert initiale secondaire. La fonction de transfert initiale secondaire est optionnelle.

Par exemple, la détermination de la fonction de transfert initiale primaire $E_{a1}$ est décrite ci-après.

Afin obtenir la fonction de transfert initiale primaire, une courbe de comportement vibro-acoustique d'un matériau de support du système initial est obtenue, dans une sous-étape E11, par le même procédé que la courbe de comportement vibro-acoustique du système initial, c'est-à-dire soit par mesure, soit par simulation.

Une courbe de comportement vibro-acoustique de l'élément du matériau de support est ensuite estimée théoriquement dans une sous-étape E12. Cette estimation pourra utiliser toute méthode à la portée de l'homme du métier et être par exemple fonction de la masse, de la raideur, de la porosité du matériau, d'autres paramètres pouvant, bien entendu, être également utilisés.

Dans une sous-étape E13, la fonction de transfert initiale primaire $E_{a1}$ est obtenue par différenciation entre la courbe obtenue dans la sous-étape E11 et celle obtenue dans la sous-étape E12.

Par exemple, dans le cas où la courbe de comportement vibro-acoustique initiale est une mesure réalisée en laboratoire, la fonction de transfert initiale est la différence entre la mesure d'un matériau de support du système initial et une estimation théorique de son comportement vibro-acoustique.

Par exemple encore, dans le cas où l'on choisit d'utiliser la fonction de transfert initiale secondaire $E_{a1'}$, sa détermination est décrite ci-après.

Une fonction de transfert initiale primaire $E_{a1}$ est déterminée comme décrit ci-dessus.

Deux courbes de comportement vibro-acoustique pour deux systèmes légèrement différents du système initial sont obtenues par le même procédé que la courbe de comportement vibro-acoustique du système initial dans des sous-étapes E14 et E15.

La fonction de transfert primaire $E_{a1}$ est éventuellement soustraite des courbes de comportement vibro-acoustique pour des systèmes légèrement différents du système initial dans des sous-étapes E16 et E17.

Des courbes transposées dans le référentiel de référence sont alors obtenues dans les sous-étapes E18, E19.

Dans une sous-étape E10, une corrélation entre ces courbes obtenues aux sous-étapes E18 et E19 est réalisée et le résultat de la corrélation est la fonction de transfert initiale secondaire $E_{a1'}$.

La corrélation consiste à comparer les courbes à partir de tout moyen connu de l'homme du métier afin de déterminer des similitudes de comportement attribuables aux spécificités vibro-acoustiques du référentiel initial.

Notons que pour la présente description on n'a considéré que deux courbes E14, E15 mais il est bien entendu possible d'en utiliser plus. Ces fonctions de transfert $E_{a1}$ et $E_{a1'}$ sont complémentaires. Chacune d'elles peut être une fonction unité.

La suite de l'étape de transposition concerne la transposition E2 proprement dite dans un référentiel de référence avant les étapes de décomposition E3, modification E4 et recomposition E5. Un exemple de mise en oeuvre est donné ci-après.

Dans une sous-étape E21 de l'étape E2, la courbe de comportement vibro-acoustique du système initial, à partir de laquelle on souhaite estimer le comportement vibro-acoustique du système final, est déterminée soit par mesure, soit par simulation.

Puis, à la sous-étape étape E22, à cette courbe est soustraite la fonction de transfert primaire $E_{a1}$ et/ou éventuellement la fonction de transfert secondaire $E_{a1'}$.

On obtient alors à l'étape E23 une courbe transposée de comportement vibro-acoustique dans le référentiel de référence $C_{S1,trans}$.

L'abscisse des extrema locaux doit être déterminée. Par exemple, si la courbe de comportement est exprimée en fonction de la fréquence, et si le système présente des fréquences de résonance, elles doivent être calculées. Le choix des méthodes de calcul est laissé à la discrétion de l'homme du métier.

Par exemple, pour un système constitué d'un faux plafond en plâtre suspendu à une dalle de béton, on peut utiliser la formule suivante :

$$f_{rés} = \frac{1}{2\pi}\sqrt{\frac{\rho_0 \cdot c^2}{d} \cdot \frac{ms_1 + ms_2}{ms_1 \cdot ms_2}} \;;$$

où c est la célérité du son dans l'air ; $\rho_0$ est la densité de l'air ; d est la distance entre la dalle de béton et le faux plafond ; $mS_1$ est la masse surfacique de la dalle de béton ; et $mS_2$ est la masse surfacique du faux plafond.

Si au moins une des fréquences de résonance se situent en-deçà de $f_{min}$, une simulation E24 de la courbe de comportement vibro-acoustique en-deçà de cette fréquence est réalisée. Les moyens pour réaliser cette simulation sont multiples et leurs choix est laissé à la discrétion de l'homme du métier (simulation par approche empirique, utilisation de données annexes, simulation par une approche scientifique etc.). On obtient alors une courbe transposée prolongée $C_{S1,prol}$.

Après les étapes de décomposition E3, de modification E4 et de recomposition E5, la courbe de comportement du système final estimée dans le référentiel de référence peut être transposée dans un référentiel final, correspondant au référentiel du système final, à l'aide d'une fonction de transfert.

Cette dernière étape du procédé, étape E6, consiste à retransposer la courbe transposée de comportement vibro-acoustique du système final, du référentiel de référence au référentiel final dans lequel on souhaite avoir le résultat.

Si le référentiel final et le référentiel initial sont identiques, la retransposition consiste à ajouter à la courbe de comportement vibro-acoustique du système final obtenue dans l'étape de recomposition E5, la fonction de transfert primaire $E_{a1}$ et/ou éventuellement la fonction de transfert secondaire $E_{a1}$, obtenues dans l'étape de transposition E1.

Si le référentiel final est différent du référentiel initial, la retransposition consiste à ajouter à la courbe de comportement vibro-acoustique du système final obtenue dans l'étape de recomposition E5, une fonction de transfert finale primaire et/ou éventuellement une fonction de transfert finale secondaire, on obtient alors une courbe du comportement vibro-acoustique du système final $C_{S2,mes}$ dans le référentiel final.

La fonction de transfert finale primaire est obtenue de la même façon qu'aux sous-étapes E11, E12 et E13 de l'étape E1 mais en substituant à la courbe de comportement vibro-acoustique d'un matériau de support du système initial, une courbe de comportement vibro-acoustique d'un matériau de support du système final exprimée dans le référentiel final. Étant équivalente à l'étape d'obtention de la première fonction de transfert initiale primaire E1, cette étape ne sera donc pas explicitée davantage.

La fonction de transfert finale secondaire est également obtenue de la même façon qu'à l'étape E1 mais en considérant des courbes de comportement vibro-acoustique de systèmes légèrement différents du système final, exprimées dans le référentiel final.

La courbe de comportement du système initial peut être une courbe mesurée, la ou les transposition(s) étant obtenue(s) par corrélation avec au moins une autre courbe mesurée.

La courbe de comportement du système initial peut être une courbe mesurée et la ou les fonction(s) de transfert peut/peuvent être obtenue(s) par soustraction entre une courbe de comportement mesurée d'un des matériaux constituant le système initial et une courbe de comportement simulée de ce matériau du système initial, et/ou par une soustraction entre une courbe de comportement mesurée d'un des matériaux constituant le système final et une courbe de comportement simulée de ce matériau du système final.

Remarquons que le procédé ci-dessus a été décrit comme comprenant une estimation du comportement vibro-acoustique d'un système à partir d'une courbe de comportement vibro-acoustique d'un unique système initial.

Or, il est bien entendu possible d'utiliser plusieurs systèmes initiaux. Par exemple, dans le cas où le système final comprendrait une loi de masse proche de celle d'un système A, une résonance proche de celle d'un système B et une fréquence critique proche de celle d'un système C, on peut décomposer les courbes de comportement vibro-acoustique des trois systèmes A, B et C suivant les étapes E1, E2, E3 et recomposer le système final à partir de la loi de masse du système A, des dégradations acoustiques produites par la résonance et de la courbe lissée du système B et des dégradations acoustiques produites par la fréquence critique du système C.

La courbe de comportement vibro-acoustique du système initial est généralement obtenue dans un intervalle fréquentiel réduit, compris entre $f_{min}$ Hz et $f_{max}$ Hz. Si la courbe de comportement vibro-acoustique du système initial est une mesure on a habituellement $f_{min}$=100 Hz et $f_{max}$=5000 Hz. Il est bien entendu possible d'effectuer des mesures sur un intervalle fréquentiel différent.

Un programme d'ordinateur selon l'invention est susceptible de mettre en oeuvre le procédé selon l'invention lorsqu'il est implémenté dans un ordinateur pour l'estimation du comportement vibro-acoustique d'un système final à partir d'au moins une courbe de comportement vibro-acoustique d'un système initial donné, ladite courbe de comportement étant obtenue par mesures acoustiques ou vibratoires sur ledit système initial ou par simulation

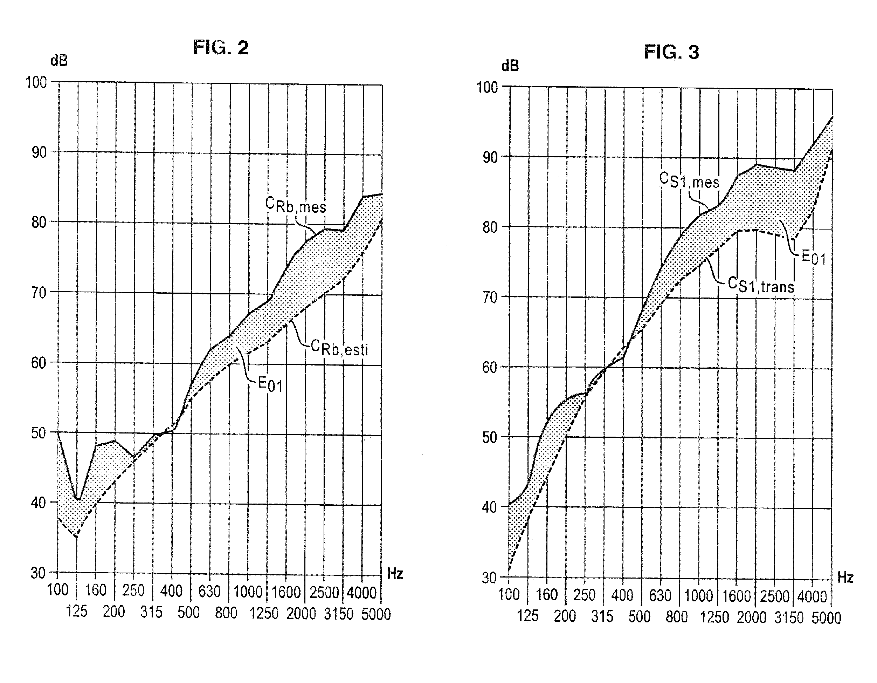

Afin de rendre plus explicite le procédé décrit ci-dessus, un exemple non limitatif est ici détaillé en référence aux figures 2 à 13. Les figures 2 à 5 et 7 à 11 sont des courbes d'indice d'affaiblissement acoustique exprimées en décibel (dB) en fonction de la fréquence en hertz (Hz) en abscisses. La fréquence est présentée suivant une échelle logarithmique.

Pour plus de clarté également, l'exemple de procédé est décrit pour une courbe de comportement vibro-acoustique exprimée en fonction de la fréquence mais cette grandeur de référence peut bien entendu être substituée par n'importe quelle autre grandeur.

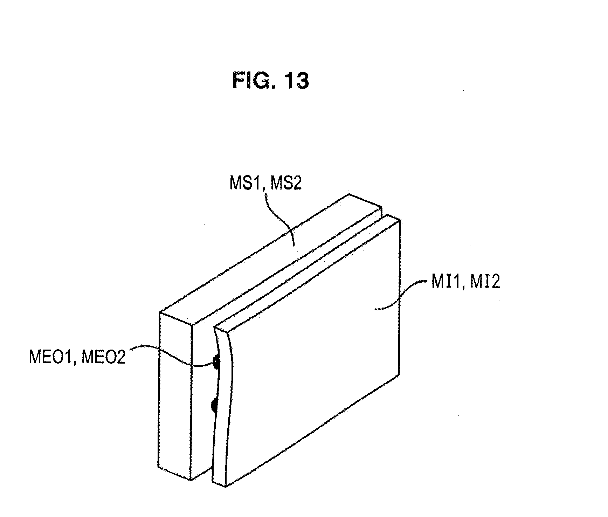

Cet exemple concerne l'identification de l'indice d'affaiblissement acoustique d'un doublage thermo-acoustique M12 mis en oeuvre sur un mur de parpaing MS2 à partir de la mesure de l'indice d'affaiblissement acoustique d'un doublage thermo-acoustique MI1 légèrement différent mis en oeuvre sur un mur de béton MS1. Rappelons que le terme « mesure d'indice d'affaiblissement acoustique » est une mesure de comportement vibro-acoustique particulière pour laquelle l'excitation du système est aérienne et pour laquelle la mesure est réalisée à l'aide de microphones. Les systèmes ont les configurations suivantes (figure 13) :

- système initial :

   o matériau de support MS1 :

      ■ mur en béton de 160 mm ;

   o doublage thermo-acoustique M11 :

      ■ laine de verre d'épaisseur de 60 mm collée à un parement en plaque de plâtre de 10 mm;

   o mise en oeuvre du doublage thermo-acoustique sur le matériau de support par plots de colle MEO1 ;

- système final :

   o matériau de support MS2 :

      ■ mur de parpaing de 200 mm ;

   o doublage thermo-acoustique M12 :

      ■ laine de verre d'épaisseur de 70 mm collée à un parement en plaque de plâtre de 13 mm ;

   o mise en oeuvre du doublage thermo-acoustique sur le matériau de support par plots de colle ME02 identiques aux plots de colle MEO1.

Cet exemple suppose de disposer de la mesure d'indice d'affaiblissement acoustique du doublage MI1 mis en oeuvre sur le mur de béton MS1 ($C_{S1,mes}$), de la mesure d'indice d'affaiblissement acoustique du mur de béton MS1 seul ($C_{Rb,mes}$) et d'une mesure d'un mur de parpaing équivalent au mur MS2 ($C_{Rp,mes}$).

Dans cet exemple, les étapes du procédé sont décrites dans l'ordre.

Dans l'étape de détermination E1 est déterminée l'empreinte acoustique primaire $E_{a1}$ permettant de passer du référentiel initial au référentiel de référence. Dans cette optique, une estimation $C_{Rb,esti}$ de l'indice d'affaiblissement du mur en béton MS1 est réalisée. L'estimation $C_{Rb,esti}$ est réalisée par une évaluation semi-expérimentale mêlant mesure et simulation numérique par ondes planes. L'empreinte acoustique initiale primaire $E_{a1}$ est obtenue en soustrayant la courbe $C_{Rb,esti}$ à la courbe $C_{Rb,mes}$ (figure 2).

Dans l'étape E2, la courbe $C_{s1,mes}$ d'indice d'affaiblissement acoustique du système initial est transposée dans le référentiel de référence par soustraction de la fonction de transfert primaire $E_{a1}$. Nous obtenons alors une courbe transposée $C_{S1,trans}$ telle qu'illustrée sur la figure 3.

La fréquence critique de la plaque de plâtre est identifiable à $f_{cr,S1}$ = 3600 Hz.

Dans cet exemple, le système initial présente une fréquence de résonance liée aux masses du mur de béton et de la plaque de plâtre et à la raideur de la lame d'air constituée par la cavité entre le mur et la plaque de plâtre. En injectant les valeurs suivantes dans la formule ci dessous :

- c = 345 m.s$^{-1}$;
- d = 75 mm (laine de verre et épaisseur des plots de colle) ;
- $ms_1$ = 368 kg.m$^2$ ; et
- $ms_2$ = 7,6 kg.m$^2$ ;

$$f_{rés} = \frac{1}{2\pi} \sqrt{\frac{\rho_0 \cdot c^2}{d} \cdot \frac{ms_1 + ms_2}{ms_1 \cdot ms_2}} \ ;$$

On obtient :

- $f_{rés,S1}$ = 83 Hz.

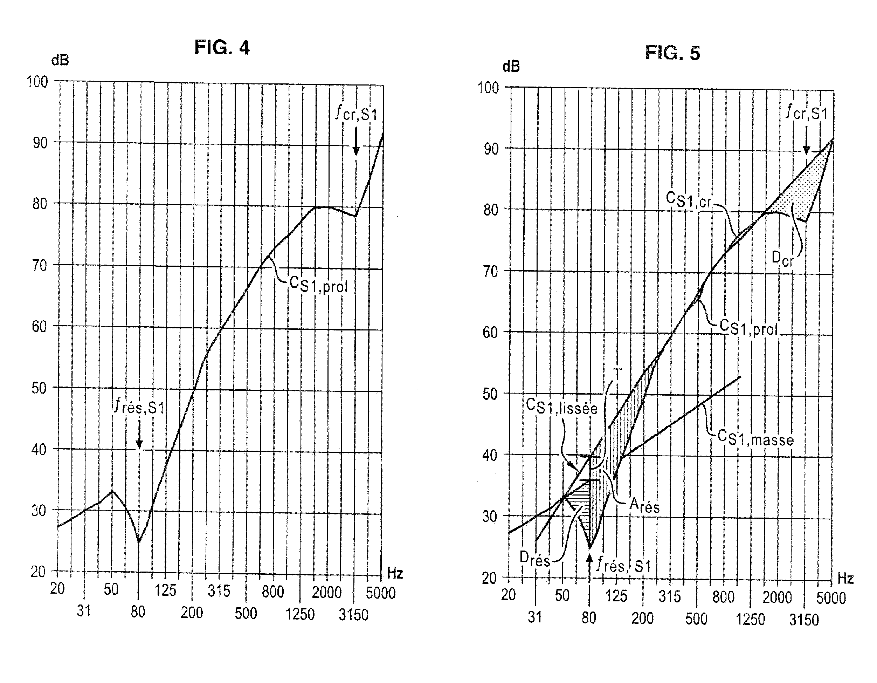

La fréquence de résonance du système initial est donc en-deçà de 100 Hz. La courbe transposée $C_{S1,trans}$ est alors prolongée en dessous de 100 Hz jusqu'à 20 Hz, et une courbe transposée prolongée $C_{S1,prol}$ est obtenue (figure 4). L'approche employée ici est une évaluation semi-expérimentale mêlant mesure et simulation numérique par ondes planes.

Dans l'étape de décomposition E3, la structure phénoménologique est déterminée par une analyse vibro-acoustique.

Une loi de masse, une résonance vibro-acoustique (de fréquence $f_{rés,S1}$) et une fréquence critique sont identifiées.

La courbe $C_{S1,prol}$ transposée et prolongée de comportement du premier système est ensuite décomposée suivant la structure phénoménologique identifiée.

Pour la loi de masse, une régression linéaire $C_{S1,masse}$ est réalisée sur les deux premiers tiers d'octave du spectre correspondant à la zone fréquentielle de loi de masse.

La résonance est décomposée en 4 courbes de décomposition secondaire (figure 5) :

- la première courbe de la description générale correspond ici à la régression linéaire de la loi de masse.
- la deuxième courbe ou courbe de dégradation acoustique occasionnée par la résonance pour les fréquences inférieures à la fréquence de résonance $D_{rés}$ (élément 1,2 de la description générale) qui est ici la différence entre la courbe de loi de masse $C_{S1,masse}$ et la courbe transposée prolongée $C_{S1,prol}$ entre la fréquence à partir de laquelle elles divergent ($D_{rés,min}$) et la fréquence de résonance ($D_{rés,max}$) ;
- la courbe lissée $C_{S1,lissée}$ est obtenue en remplaçant la zone de résonance par une régression linéaire réalisé sur la portion de la courbe dont l'évolution est quasiment logarithmique (ici 250 Hz - 630 Hz) et en extrapolant la zone de fréquence critique par une approche semi-expérimentale mêlant mesure et simulation numérique par ondes planes ;
- la quatrième courbe ou courbe d'accélération $A_{rés}$ après la fréquence de résonance qui est la différence entre la courbe lissée $C_{S1,lissée}$ et la courbe transposée prolongée $C_{S1,prol}$ entre la fréquence de résonance ($A_{rés,min}$) et la fréquence à laquelle les deux courbes convergent ($A_{rés,max}$);

La fréquence critique est déterminée comme suit : on extrapole $C_{S1,prol}$ autour de $f_{cr,S1}$ par la droite $C_{S1,cr}$, puis on substitue $C_{S1,cr}$ à $C_{S1,lissée}$ pour les fréquences supérieures à leur fréquence d'intersection.

La courbe de dégradation acoustique critique occasionnée par le phénomène de fréquence critique $D_{cr}$ est obtenue par la différence entre $C_{S1,lissée}$ ainsi modifiée et la courbe transposée prolongée autour de la fréquence critique, entre la fréquence à laquelle les deux courbes divergent (1000Hz) et la fréquence à laquelle les deux courbes convergent (5000Hz).

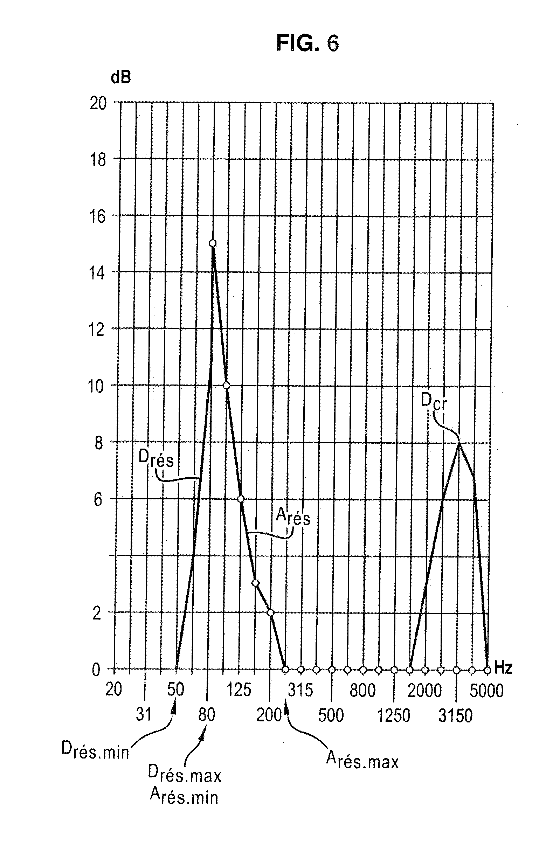

A ce stade, on dispose donc d'une courbe de loi de masse $C_{S1,masse}$ , d'une courbe lissée $C_{S1,lissée}$ (modifiée à partir du point d'intersection avec $C_{S1,cr}$) et de courbes de dégradation $D_{res}$, $A_{rés}$ et $D_{cr}$ dépendant de la fréquence (voir figure 6).

L'étape de modification E4 consiste à déterminer par une analyse vibro-acoustique les phénomènes et comportements devant changer entre le système initial et le système final et à réaliser les modifications adéquates. La méthode utilisée est une analyse vibro-acoustique classique.

Dans cet exemple, les phénomènes et comportements devant changer sont : la loi de masse, la fréquence de résonance et la fréquence critique. Leurs modifications pour simuler ceux du système final sont réalisées comme suit :

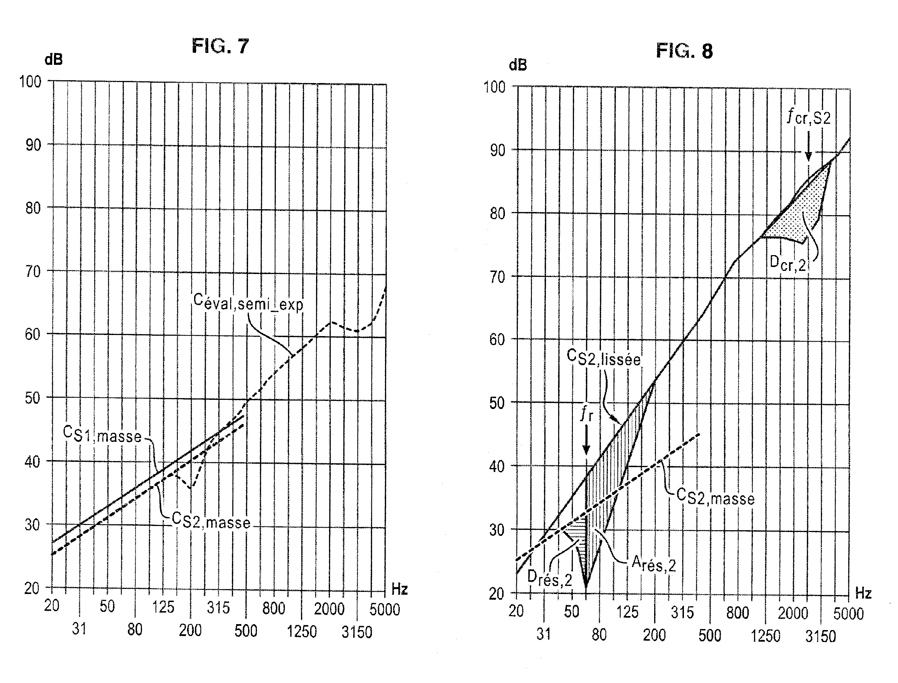

La nouvelle loi de masse $C_{s2,masse}$ est obtenue par évaluation semi-expérimentale $C_{éval,semi\_exp}$ par rapport à la loi de masse initiale (figure 7). On peut voir sur la figure 7 que la nouvelle loi de masse est ici une translation suivant l'axe des ordonnées de la loi de masse du système initial.

Ensuite les variations de fréquence de résonance et de fréquence critique entre le système initial et le système final sont calculées via les relations ci dessous :

$$f_{cr,S2} = \frac{c^2}{2\pi} \sqrt{\frac{ms_2}{D}} \; ; \; D = \frac{E \cdot h^3}{12} \; ;$$

$$f_{rés,S2} = \frac{1}{2\pi} \sqrt{\frac{\rho_0 \cdot c^2}{d} \cdot \frac{ms_1 + ms_2}{ms_1 \cdot ms_2}} \; ;$$

Avec :

- c = 345 m/s[1] ;
- d = 85 mm (laine de verre et épaisseur des plots de colle) ;
- $ms_1$ = 270 kg/m[2] ;
- $ms_2$ = 9,88 kg/m[2] ;

On obtient

- $f_{rés,S2}$ = 69 Hz contre $f_{rés,S1}$ = 83 Hz, soit une diminution de 14 Hz ;
- $f_{cr,S2}$ = 2800 Hz contre $f_{cr,S1}$ = 3600 Hz, soit une diminution de 800 Hz.

L'étape suivante est l'étape de recomposition E5. La fréquence de résonance étant comprise entre deux tiers d'octave $f_1$ = 63 Hz et $f_2$ = 80 Hz, on réalisera une recomposition E51 pour $f_{rés,S2}$ = $f_1$ et une autre pour $f_{rés,S2}$ = $f_2$ et on obtiendra le résultat final par interpolation E52 entre les deux recompositions.

La recomposition E51 pour le tiers d'octave $f_1$ est réalisée comme suit.

Premièrement, $D_{rés}$ est translatée suivant l'axe des abscisses de $f_{rés,S1}$ - $f_1$ = 20 Hz, de sorte que la fréquence haute de $D_{rés}$ ($D_{rés,max}$) coïncide avec la fréquence de résonance $f_1$. On obtient alors une courbe $D_{rés,2}$. Puis, $D_{rés,2}$ est soustrait à $C_{S2,masse}$ (figure 8). On détermine ainsi une première courbe intermédiaire [$C_{S2,masse}$- $D_{rés,2}$].

Deuxièmement, la courbe lissée est transposée. Pour commencer, la différence T entre la courbe lissée et la loi de masse $C_{S1,masse}$ à la fréquence de résonance du système initial ($f_{rés,S1}$ = 83 Hz) est enregistrée.

Ensuite, la courbe lissée est translatée suivant l'axe des ordonnées, de sorte que l'intersection avec $C_{S1,masse}$ se fasse à la fréquence de résonance du système initial ($f_{rés,S1}$ = 83 Hz).

Puis la courbe lissée obtenue est à nouveau translatée suivant l'axe des ordonnées, de sorte que l'intersection avec $C_{S2,masse}$ se fasse à la fréquence de résonance du système initial ($f_{rés,S1}$ = 83 Hz).

Puis la courbe lissée obtenue est à nouveau translatée suivant l'axe des ordonnées, de sorte que l'intersection avec $C_{S2,masse}$ se fasse à la fréquence de résonance du système final ($f_{rés,S2}$ = 69 Hz).

Enfin la courbe lissée obtenue est à nouveau translatée suivant l'axe des ordonnées en lui ajoutant la valeur T. Cela détermine alors la courbe lissée $C_{S2,lissée}$ du système final (figure 8).

Troisièmement, l'accélération $A_{rés}$ adaptée est appliquée à la courbe lissée $C_{S2,lissée}$ obtenue précédemment. Pour cela, on translate la courbe de $A_{rés}$ suivant l'axe des abscisses de $f_{rés,S1}$ - $f_1$ = 20 Hz, de sorte que $A_{rés,min}$ coïncide avec la fréquence de résonance $f_1$. On obtient alors une courbe $A_{rés,2}$. Puis, $A_{rés,2}$ est soustrait à $C_{S2,lissée}$. On détermine ainsi une seconde courbe intermédiaire [$C_{S2,lissée}$- $A_{rés,2}$].

Quatrièmement, une nouvelle fréquence critique est recomposée. Pour cela on translate $D_{cr}$ suivant l'axe des abscisses de $f_{cr,S1}$ - $f_{cr,S2}$ = 800 Hz. On obtient alors une courbe $D_{cr,2}$. Puis on soustrait $D_{cr,2}$ à [$C_{S2,lissée}$- $A_{rés,2}$]. On détermine ainsi une troisième courbe intermédiaire [$C_{S2,lissée}$ - $A_{rés,2}$ - $D_{cr,2}$].

Enfin, on crée la courbe transposée $C_{S2,f1}$ correspondant au tiers d'octave $f_1$, en assemblant la portion de [$C_{S2,masse}$- $D_{rés,2}$] allant de 20 Hz à $f_1$ à la portion de [$C_{S2,lissée}$ - $A_{rés,2}$ - $D_{cr,2}$] allant de $f_1$ à 5000Hz.

On notera dans cet exemple que $D_{rés}$, $A_{rés}$, et $D_{cr}$ changent peu, ils sont simplement transposés. D'autres cas où ces courbes seraient amenées à changer de façon plus importante sont bien entendu possibles ; dans cette hypothèse, il faudrait les recalculer en conséquence avant l'étape de recomposition.

La recomposition pour le tiers d'octave $f_2$ est réalisée de la même façon que pour le tiers d'octave $f_1$, en substituant la valeur de $f_2$ à $f_1$ dans les cinq étapes de recomposition ci dessus. On obtient alors une courbe $C_{S2,f2}$.

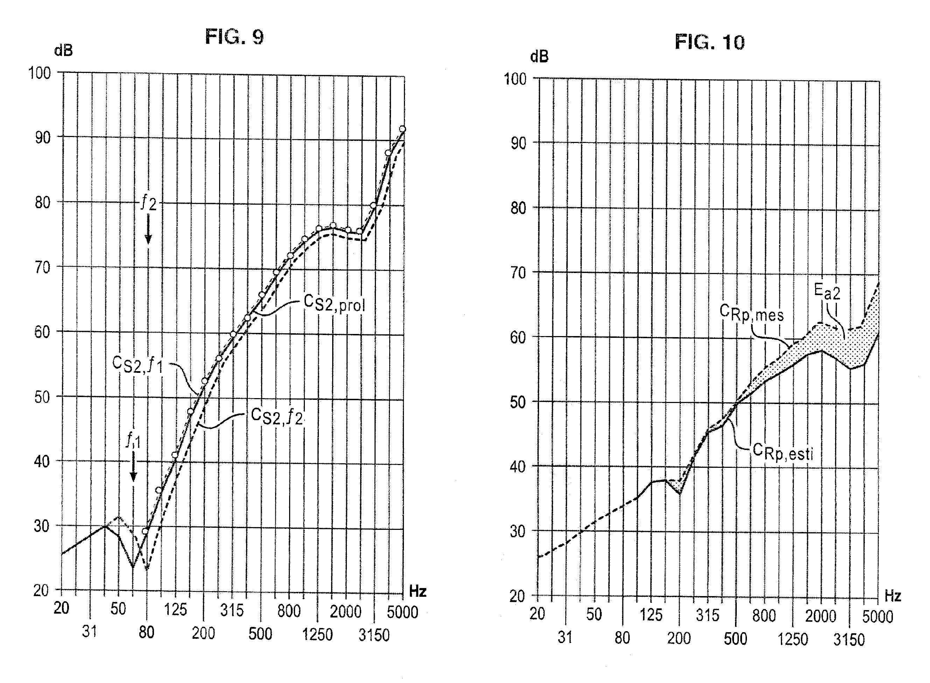

L'étape suivante consiste à interpoler les courbes $C_{S2,f1}$ et $C_{S2,f2}$ pour obtenir la courbe $C_{S2,prol}$ transposée prolongée de comportement vibro-acoustique du système final (figure 9).

Puis $C_{S2,prol}$ est présenté dans la plage de fréquence de la mesure initiale (100Hz - 5000Hz). On obtient alors une courbe $C_{S2,trans}$.

Enfin l'étape de retransposition E6 concerne la retransposition de $C_{S2,trans}$ dans le référentiel final.

Dans cet exemple, le matériau de support initial et le matériau de support final ne sont pas identiques, donc le référentiel initial et le référentiel final diffèrent.

La fonction de transfert primaire finale $E_{a2}$ doit être obtenue. Elle est déterminée par soustraction d'une estimation $C_{Rp,esti}$ de l'indice d'affaiblissement acoustique du mur de parpaing final (obtenue comme à l'étape E1), à sa mesure $C_{Rp,mes}$ (figure 10).

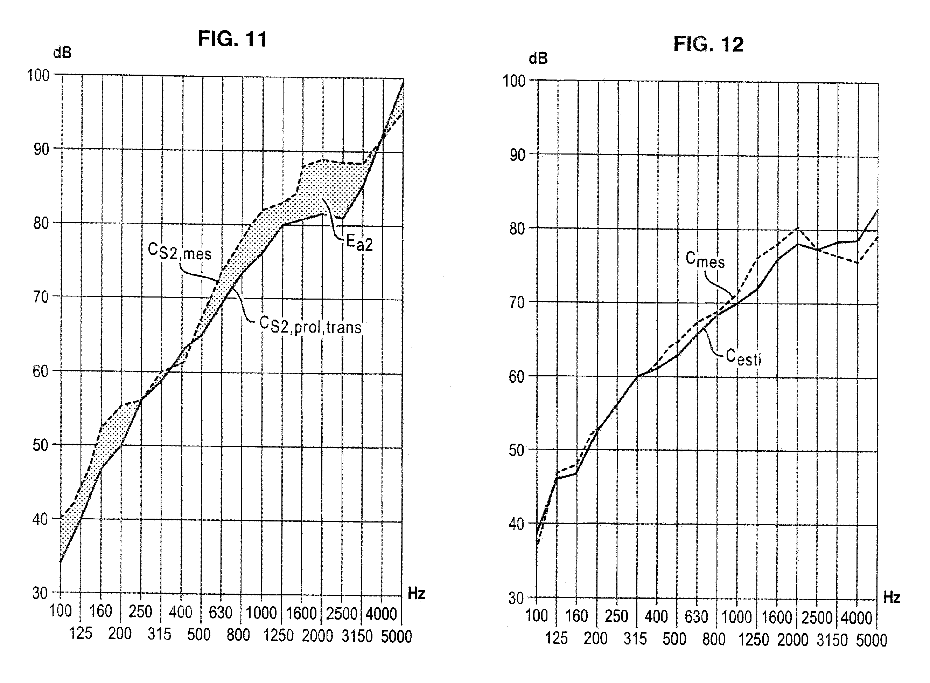

Pour finir, la fonction de transfert primaire finale $E_{a2}$ est ajoutée à la courbe $C_{S2,trans}$ et après réduction de la zone fréquentielle à la zone fréquentielle d'usage de présentation d'une mesure, on obtient une courbe $C_{S2,mes}$ de comportement vibro-acoustique du système final dans le référentiel de mesure (figure 11).

Un avantage du procédé d'estimation selon l'invention est qu'il permet d'une part de prendre en compte les particularités acoustiques du produit, les spécificités vibro-acoustique du laboratoire qui réalise la mesure initiale, et les particularités de mise en oeuvre du produit là où une approche calculatoire ne pourrait actuellement fournir qu'une estimation générique.

Un autre avantage est de permettre une utilisation par du personnel non scientifique.

Un autre avantage est la précision des estimations. Une marge de précision maximale d'environ $\pm 1$ dB peut être obtenue.

La figure 12 présente une confrontation estimation/mesure dont l'objectif est de déterminer l'indice d'affaiblissement acoustique d'une cloison légère (système final) ($C_{esti}$) à partir de l'indice d'affaiblissement acoustique d'une cloison légèrement différente (système initial) puis de confronter cette estimation à la mesure du système final $C_{mes}$ préalablement réalisé.

Le système initial est constitué comme suit : cloison légère à double ossature constituée d'un premier parement en OSB10 (panneau de particules orientées) et d'un second constitué d'un assemblage OSB10 et BA13™ (plaque de plâtre cartonnée),

Le système final est constitué comme suit : cloison légère à double ossature avec deux parements identiques constitués de l'assemblage OSB10 et BA13™.

L'estimation et la mesure de la courbe d'indice d'affaiblissement acoustique du système final sont présentées sur la figure 12.

L'homme du métier verra que l'estimation donne des résultats globaux sensiblement identiques voire parfaitement identiques à la mesure :

- estimation : $R_{w,esti} =$ 65 dB, $R_{a,esti}$ = 62 dB, $R_{a,tr,esti}$ = 56 dB ;
- mesure : $R_{w,mes}$ = 65 dB, $R_{a,mes}$ = 62 dB, $R_{a,tr,mes}$ =56 dB.

Enfin, il est, bien entendu, possible d'apporter de nombreuses modifications au procédé d'estimation décrit.

Le procédé qui vient d'être décrit l'a été principalement dans le cas d'une mesure d'indice d'affaiblissement acoustique. Il s'applique bien entendu de façon plus générale à toute mesure de comportement vibro-acoustique et notamment par exemple également aux mesures d'affaiblissement au bruit de choc.

**Revendications**

1. Procédé d'estimation du comportement vibro-acoustique d'un système final à partir d'au moins une courbe ($C_{S1,mes}$) de comportement vibro-acoustique d'au moins un système initial donné, ladite courbe ($C_{S1,mes}$) de comportement étant obtenue par mesures acoustiques ou vibratoires sur ledit système initial ou par simulation, **caractérisé en ce qu'**il comprend les étapes suivantes :

   - décomposition (E3) primaire, de la courbe ($C_{S1,mes}$) de comportement du système initial, ou d'au moins une courbe issue de celle-ci, en plusieurs courbes de décomposition ($C_{S1,masse}$, $C_{S1,lissée}$, $C_{S1,prol}$, $C_{S1,cr}$...), chaque courbe de décomposition correspondant à un phénomène ou à un comportement vibro-acoustique donné ;
   - modification (E4) d'au moins une courbe de décomposition primaire ou d'au moins une courbe issue de celle-ci pour l'adapter aux caractéristiques du système final dont le comportement est à estimer ;
   - recomposition (E5) d'une courbe ($C_{S2,mes}$) caractéristique du comportement vibro-acoustique du système final à partir de la ou des courbe(s) adaptée(s) et/ou d'une ou plusieurs courbe(s) ($C_{S1,mes}$) de décomposition primaire.

2. Procédé selon la revendication 1, **caractérisé en ce que** le phénomène ou le comportement vibro-acoustique est compris dans le groupe suivant :

- un phénomène de résonance vibro-acoustique ;
- un phénomène de fréquence critique ;
- un phénomène d'interaction avec un référentiel initial ;
- un phénomène vibratoire intrinsèque au système initial ;
- un comportement suivant une loi de masse ;
- un comportement de type « raideur » ;
- un comportement de type «paroi double».

**3.** Procédé selon la revendication 1 ou 2, **caractérisé en ce qu'**il comprend, dans l'étape de première décomposition (E3) et dans le cas d'un phénomène vibro-acoustique, une deuxième décomposition de la courbe de décomposition primaire correspondant au phénomène en au moins une courbe ($D_{rés}$, $A_{rés}$; $D_{cr}$) de comportement secondaire dépendante du phénomène et au moins une courbe ($C_{S1,masse}$ ; $C_{S1,lissée}$) de comportement secondaire indépendante du phénomène.

**4.** Procédé selon la revendication 3, **caractérisé en ce que** lorsque le phénomène vibro-acoustique occasionne une variation d'amplitude sur la courbe de comportement du système initial avec un extremum local, la ou les courbes de comportement secondaire(s) sont comprise(s) dans le groupe suivant :

- une première courbe ($C_{S1,masse}$) extrapolée indépendante du phénomène et correspondant à une extrapolation de la courbe de comportement du système initial, pour des abscisses inférieures à l'abscisse ($f_1$) de l'extremum local ;
- une deuxième courbe ($D_{rés}$) représentant la variation d'amplitude occasionnée par le phénomène vibro-acoustique pour les abscisses inférieures à l'abscisse ($f_1$) de l'extremum local ;
- une troisième courbe ($C_{S1,lissée}$) extrapolée indépendante du phénomène et correspondant à une extrapolation de la courbe de comportement du système initial, pour les abscisses supérieures à l'abscisse ($f_1$) de l'extremum local ;
- une quatrième courbe ($A_{rés}$) représentant la variation d'amplitude occasionnée par le phénomène vibro-acoustique pour les abscisses supérieures à l'abscisse ($f_1$) de l'extremum local.

**5.** Procédé selon la revendication 4, **caractérisé en ce que** la troisième courbe ($C_{S1,lissée}$) est obtenue par régression linéaire réalisée sur une portion de la courbe de comportement du système initial d'abscisse supérieure à l'abscisse ($f_1$) de l'extremum local ; et **en ce que** la quatrième courbe ($A_{rés}$) est obtenue par différence entre la troisième courbe ($C_{S1,lissée}$) et la courbe ($C_{S1,mes}$) de comportement du système initial ou une courbe déduite de celle-ci.

**6.** Procédé selon l'une quelconque des revendications précédentes **caractérisé en ce que** la modification est réalisée par translation de la courbe de décomposition primaire et/ou d'une des courbes de décomposition secondaire.

**7.** Procédé selon l'une des revendications 4, 5 ou 6 lorsque la revendication 6 est dépendante de la revendication 4 ou 5, **caractérisé en ce que** la courbe ($C_{S2,mes}$) de comportement vibro-acoustique du système final est obtenue par recomposition (E5) des première, deuxième, troisième et quatrième courbes de la manière suivante:

- la deuxième courbe, éventuellement adaptée, est ajoutée ou éventuellement retranchée à la première courbe, également éventuellement adaptée, en deçà de l'abscisse de l'extremum local ;
- la différence (T), à l'abscisse de l'extremum local ($f_1$), entre la troisième courbe non adaptée et la première courbe non adaptée est enregistrée ;
- la troisième courbe est translatée suivant l'axe des ordonnées de sorte que l'intersection avec la première courbe, éventuellement adaptée se fasse à l'abscisse de l'extremum local, éventuellement adaptée au système final ($f_2$) ;
- la différence (T), à l'abscisse de l'extremum local ($f_1$), entre la troisième courbe non adaptée et la première courbe non adaptée est ajoutée à la troisième courbe précédemment translatée ;
- la quatrième courbe, éventuellement adaptée, est soustraite de la troisième courbe ainsi translatée, au-delà de l'abscisse de l'extremum local ;
- la courbe de décomposition primaire et la courbe adaptée, ou au moins une courbe issue de celles-ci, sont recomposées ensemble en associant les courbes ainsi modifiées.

**8.** Procédé selon l'une quelconque des revendications précédentes, **caractérisé en ce que**, préalablement à toute décomposition, modification et recomposition, la courbe de comportement du système initial est transposée (E2) dans un référentiel de référence, dans lequel les phénomènes vibro-acoustiques non intrinsèques au système initial, ou à une partie du système, sont minimisés à l'aide d'une fonction de transfert ($E_{a1}$), les étapes de décomposition (E3), modification (E4) et recomposition (E5) sont alors effectuées sur les courbes transposées ($C_{S1,trans}$) dans ce référentiel de référence.

9. Procédé selon la revendication 8, dans lequel la courbe de comportement du système final estimée dans le référentiel de référence est transposée (E6) dans un référentiel final, correspondant au référentiel du système final, à l'aide d'une fonction de transfert après les étapes de décomposition (E3), modification (E4) et recomposition (E5).

10. Procédé selon la revendication 8 ou 9, dans lequel la courbe de comportement du système initial est une courbe mesurée et que la ou les transpositions sont obtenues par corrélation avec au moins une autre courbe mesurée.

11. Procédé selon la revendication 8 ou 9, dans lequel la courbe de comportement du système initial est une courbe mesurée et dans lequel la ou les fonction(s) de transfert est ou sont obtenue(s) par soustraction entre une courbe de comportement mesurée d'un des matériaux constituant le système initial et une courbe de comportement simulée de ce matériau du système initial, et/ou par une soustraction entre une courbe de comportement mesurée d'un des matériaux constituant le système final et une courbe de comportement simulée de ce matériau du système final.

12. Programme d'ordinateur susceptible de mettre en oeuvre le procédé selon l'une des revendications 1 à 11 lorsqu'il est implémenté dans un ordinateur pour l'estimation du comportement vibro-acoustique d'un système final à partir d'au moins une courbe de comportement vibro-acoustique d'un système initial donné, ladite courbe de comportement étant obtenue par mesures acoustiques ou vibratoires sur ledit système initial ou par simulation.

## FIG. 1

FIG. 2

FIG. 3

**FIG. 4**

dB

$f_{cr,S1}$

$C_{S1,prol}$

$f_{rés,S1}$

Hz

**FIG. 5**

dB

$f_{cr,S1}$

$C_{S1,cr}$

$D_{cr}$

$C_{S1,prol}$

$C_{S1,lissée}$

T

$C_{S1,masse}$

$A_{rés}$

$D_{rés}$

$f_{rés,S1}$

Hz

EP 2 211 284 A1

# FIG. 6

FIG. 8

FIG. 7

FIG. 9

FIG. 10

EP 2 211 284 A1

FIG. 12

FIG. 11

## FIG. 13

MS1, MS2

MI1, MI2

MEO1, MEO2

Europäisches
Patentamt

European
Patent Office

Office européen
des brevets

**RAPPORT DE RECHERCHE EUROPEENNE**

Numéro de la demande

EP 10 15 0779

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SAKUMA T ET AL: "Numerical vibro-acoustic analysis of sound insulation performance of wall members based on a 3D transmission model with a membrane/plate" ACOUSTICAL SCIENCE AND TECHNOLOGY ACOUST. SOC. JAPAN JAPAN, vol. 22, no. 5, septembre 2001 (2001-09), pages 367-369, XP002527436 * le document en entier * | 1-12 | INV. G06F17/50 ADD. H04R29/00 |
| A | US 6 090 147 A (BREMNER PAUL M [US] ET AL) 18 juillet 2000 (2000-07-18) * le document en entier * | 1-12 | |
| A | US 2005/066618 A1 (TUCKER MARK IRVINE [NZ]) 31 mars 2005 (2005-03-31) * le document en entier * | 1-12 | |
| A | LIU Z S ET AL: "Passive and active interior noise control of box structures using the structural intensity method" APPLIED ACOUSTICS, ELSEVIER PUBLISHING, GB, vol. 67, no. 2, 1 février 2006 (2006-02-01), pages 112-134, XP025050042 ISSN: 0003-682X [extrait le 2006-02-01] * le document en entier * | 1-12 | **DOMAINES TECHNIQUES RECHERCHES (IPC)** G06F |
| A | A. BILLON ET AL: "Modeling the sound transmission between rooms coupled through partition walls by using a diffusion model" J. ACOUST. SOC. AMERICA, vol. 123, no. 6, juin 2008 (2008-06), pages 4261-4271, XP012111208 * le document en entier * | 1-11 | |

Le présent rapport a été établi pour toutes les revendications

| Lieu de la recherche | Date d'achèvement de la recherche | Examinateur |
|---|---|---|
| Munich | 8 février 2010 | Wellisch, J |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 10 15 0779

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-02-2010

| Document brevet cité au rapport de recherche | | Date de publication | Membre(s) de la famille de brevet(s) | | Date de publication |
|---|---|---|---|---|---|
| US 6090147 | A | 18-07-2000 | AUCUN | | |
| US 2005066618 | A1 | 31-03-2005 | AU | 2003212045 A1 | 29-01-2004 |
| | | | CA | 2435052 A1 | 11-01-2004 |

EPO FORM P0460

Pour tout renseignement concernant cette annexe : voir Journal Officiel de l'Office européen des brevets, No.12/82